# EUROPÄISCHE PATENTSCHRIFT

(11) **EP 1 089 006 B1**
(45) Veröffentlichungstag und Bekanntmachung des Hinweises auf die Patenterteilung: **29.11.2006**
(21) Anmeldenummer: 00120281.1
(22) Anmeldetag: 28.09.2000
(51) Int. Cl.: F16D 25/12, F16D 25/08

(54) **Hydropneumatischer Kupplungskraftverstärker und darauf aufgebautes Kupplungssystem sowie hierfür geeignetes Verfahren**
Hydropneumatic clutch booster and clutch system containing the same as well as method used
Servo-embrayage hydropneumatique et système comprenant le dite aussi que méthode utilisée

(30) Priorität: 29.09.1999 DE 19946678
(43) Veröffentlichungstag der Anmeldung: 04.04.2001
(73) Patentinhaber: KNORR-BREMSE SYSTEME FÜR NUTZFAHRZEUGE GMBH, 80809 München (DE)
(72) Erfinder: Pizzolato, Paolo, 86899 Landsberg (DE); Dotti, Guilio, 20121 Milano (IT)

(56) Entgegenhaltungen:
- BR-A- 9 501 839
- DE-A- 1 576 178
- GB-A- 708 285
- US-A- 3 023 053
- US-A- 4 591 034

## Beschreibung

Die vorliegende Erfindung betrifft einen hydropneumatischen Kupplungskraftverstärker nach dem Oberbegriff des Anspruchs 1, ein mit einem solchen Kupplungskraftverstärker versehenes Kupplungssystem nach dem Oberbegriff des Anspruchs 16 sowie ein hierfür geeignetes Verfahren nach dem Oberbegriff des Anspruchs 19.

Bekannte Kupplungssysteme bestehen aus einem Hydraulikgeber-Zylinder, der an der Pedalerie des Fahrzeugs montiert ist und aus einem Kupplungskraftverstärker, der am Getriebe angebracht ist. Derartige bekannte Kupplungssysteme benötigen durch die verteilte Anordnung der einzelnen Komponenten in der Summe zuviel Bauraum. Ihre Herstellung ist zudem aufgrund der Vielzahl von in sich abgeschlossenen Teilsystemen und der damit einhergehenden Teilevielfalt aufwendig und damit teuer.

Eine beispielhafte Ausführungsform eines vorstehend erwähnten Kupplungskraftverstärkers bzw. einer Betätigungseinrichtung für die pneumatische Betätigung einer Reibungskupplung ist aus der DE 197 16 600 A1 bekannt. Dort ist eine Betätigungseinrichtung offenbart, für eine im Antriebsstrang eines Nutzkraftfahrzeugs, zwischen einer Brennkraftmaschine und einem Getriebe in einer Gehäuseglocke angeordnete Reibungskupplung. Die dort beschriebene Betätigungseinrichtung umfaßt eine im wesentlichen gleichachsig zur Reibungskupplung bewegliche Ausrücklageranordnung zur Betätigung der Reibungskupplung, eine Positionierservoanordnung mit einer auf die Ausrücklageranordnung wirkenden Pneumatikkraftzylinderanordnung, die ihrerseits über ein mit einer Pneumatikquelle verbundenes Steuerventil abhängig von einer, eine Sollposition repräsentierenden Führungsgröße und einer die axiale Position der Ausrücklageranordnung repräsentierenden Ist-Größe betätigbar ist. Diese bekannte Betätigungseinrichtung bzw. dieser Kupplungskraftverstärker ist aufgrund seines sehr komplexen Aufbaus ebenfalls aufwendig in der Herstellung.

Eine weitere Variante einer Kupplungsbetätigungseinrichtung bzw. eines Kupplungskraftverstärkers ist aus der DE 44 05 914 A1 bekannt. Der Aufbau dieses pneumatischen Arbeitszylinders zum Betätigen einer Kupplung ist zwar geringfügig einfacher als derjenige, der aus der DE 197 16 600 bekannten Betätigungseinrichtung, er ist jedoch für eine preiswerte Herstellung aufgrund der relativ hohen Teilevielfalt immer noch zu komplex.

Die EP 0 751 315 B 1 der selben Anmelderin beschreibt erstmals einen hydropneumatischen Kupplungskraftverstärker, der sich im Alltag bewährt hat. Dieser hydropneumatische Kupplungskraftverstärker weist an seinem Gehäuse ein vorzugsweise baulich integriertes Steuerteil in Form eines Steuerventils auf, welches bei hydraulischer Beaufschlagung durch eine Fußpedalkraft über einen Steuerkolben auf ein pneumatisches Einlaß- und Auslaßventil für die Druckluftbeaufschlagung des pneumatischen Servokolbens einwirkt. Kupplungskraftverstärker dieser Art sollen die Fußpedalkraft mittels Druckluft über einen Servolkolben proportional verstärken. Sie neigen jedoch bei Rücknahme der Fußpedalkraft zu einem axialen Schwingen des Proportionalventils, wobei sich dieses Schwingen am Kupplungsfußpedal durch ein hochfrequentes Vibrieren bzw. durch ein sogenanntes schnatterndes Ablaßgeräusch am Kupplungskraftverstärker störend bemerkbar macht. Zur Vermeidung dieses Nebeneffekts ist auf der der Hydraulikseite des Steuerkolbens zugewandten Seite ein Zapfen ausgebildet, der in eine entsprechende Bohrung, die in die ihm zugewandte Seite des Steuerkolbens eingebracht ist, hineinragt. Durch den in jeder Betriebsstellung des Steuerkolbens erfolgenden gegenseitigen Eingriff von Zapfen und Bohrung erfolgt wechselweise ein Befüllen bzw. Entleeren des sich im Steuerkolben vergrößernden und verkleinernden Volumens, was zu einem Dämpfungsverhalten des Steuerkolbens bei höherfrequenter Schwingungsanregung beiträgt. Als Resultat tritt kein hochfrequentes Vibrieren des Kupplungspedals auf.

Dieser bekannte hydropneumatische Kupplungskraftverstärker benötigt jedoch immer noch einen zu großen Bauraum. Zudem ist er, wie die vorstehend beschriebenen Kraftverstärker für eine preiswerte Herstellung immer noch zu komplex aufgebaut.

Daneben ist aus der DE-AS 1 576 178 ein gattungsfremder Druckluftarbeitszylinder für einen Bremskraftverstärker bekannt, der einen hydraulischen Hauptzylinder und einen pneumatischen Druckluftarbeitszylinder mit jeweils darin angeordneten Kolben aufweist, wobei im Druckluftarbeitszylinder wenigstens ein Steuer- bzw. Betätigungskolben und eine Servokolben enthalten sind. Der Betätigungskolben des Druckluftarbeitszylinders beinhaltet seinerseits ein Einlaß- und Auslaßventil für Druckluft, die zur Bremskraftverstärkung dienen soll. Der vom Bremspedal betätigte Steuerkolben steuert über das in ihm integrierte Einlaß-/Auslaßventil den auf den Servo- bzw. Arbeitskolben wirkenden Druck, wobei der Arbeitskolben seinerseits die durch die Druckluft verstärkte Bremskraft mittels eines Stößels auf den Hydraulikkolben überträgt. Letzterer wirkt dann hydraulisch auf die Bremsen ein.

US 4,591,034 A beschreibt einen hydmpneumatischen Kupplungskraftverstärker mit den Merkmalen des Oberbegriffes von Anspruch 1 und ein Verfahren zu dessen Steuerung mit den Merkmalen des Oberbegriffes von Anspruch 19.

Die Aufgabe der Erfindung besteht darin, einen möglichst kompakten und einfach aufgebauten hydropneumatischen Kupplungskraftverstärker und ein darauf aufbauendes Kupplungssystem sowie ein Verfahren vorzuschlagen, mit denen eine anzusteuernde Kupplung möglichst feinfühlig angesteuert werden kann.

Diese Aufgabe wird durch einen hydropneumatischen Kupplungskraftverstärker gemäß Anspruch 1, ein Kupplungssystem gemäß Anspruch 16 sowie ein Verfahren gemäß Anspruch 19 gelöst.

Vorteilhafte Weiterentwicklungen sind Gegenstand der abhängigen Ansprüche.

Aufgrund der bei hydropneumatischen Kupplungskraftverstärkem erstmaligen Umkehr der Anordnung von pneumatischem und hydraulischem Kolben in der Weise, daß der pneumatische Kolben zuerst mit dem über einen Stempel eingeleiteten Kupplungssignal bzw. der Pedalkraft beaufschlagt wird, und dieser seinerseits einen im selben kompakten Gehäuse angeordneten hydraulischen Kolben ansteuert, ist es erstmals vorteilhaft gelungen, die Anzahl der einzelnen Bauelemente eines solchen hydropneumatischen Kupplungskraftverstärkers als auch eines darauf aufbauenden Kupplungssystems gemäß Anspruch 16 entscheidend zu reduzieren, wobei die den Kraftverstärker aufbauenden einzelnen Teile bzw. Bauelemente als solche in vorteilhafter Weise konstruktiv einfacher gehalten sein können. Damit einhergehend konnte eine Vereinfachung des Zusammenbaus dieses hydropneumatischen Kupplungskraftverstärkers erreicht werden, wobei die verringerte Verschleißneigung zu einer merklichen Erhöhung der Standzeiten und damit zu einer Verbesserung der Wartungsfreundlichkeit führt, was sich wiederum in einer Kostensenkung bemerkbar macht.

Zwar ist aus der gattungsfremden DE-AS 1 576 178 eine solche Umkehr der Anordnung von pneumatischem und hydraulischem Kolben bei einem hydropneumatischen Bremskraftverstärker bekannt. Der in der DE-AS 1 576 178 offenbarte hydropneumatische Bremskraftverstärker soll die unterschiedlichen Bremskraftanforderungen bei einer alleinfahrenden Zugmaschine, die häufig auch als Leicht-Lastkraftwagen eingesetzt wird, und bei einer Zugmaschine mit Anhänger mit nur einem Bremskraftverstärker abdecken, der dann zwei unterschiedliche Bremskraftverstärkungen bereit stellen soll. Hierfür beinhaltet der pneumatische Zylinder einen Steuer- bzw. Betätigungskolben mit einem integrierten Einlaß/Auslaß-Ventil und einen Servo- bzw. Arbeitskolben mit einer ersten Fläche F sowie einen zweiten, ringförmig darum herum angeordneten zweiten Servo- bzw. Arbeitskolben mit einer zusätzlichen Fläche f, so daß durch dessen Zuschaltung eine Erhöhung der Bremskraftverstärkung durch die Vergrößerung der Servofläche von F auf F + f erreicht werden kann. Zudem bestehen bei diesem Bremskraftverstärker keine besonderen Anforderungen an seine Hysteresis, was durch die Abdichtung des Steuerkolbens mittels zweier Dichtungsringe deutlich wird.

Im Gegensatz hierzu wird bei einem erfindungsgemäßen Kupplungskraftverstärker für eine gewünschte, feinfühlige Steuerung eine möglichst kleine Hysteresis gefordert, weshalb bei der vorliegenden Erfindung im Gegensatz zur DE-AS 1 576 178 beispielsweise ein möglichst geringer Querschnitt des Steuerstempels gewählt ist, der zudem vorzugsweise reibungsarm gegen das Gehäuse, beispielsweise mittels eines Staubschutzes und eines Führungsrings, abgedichtet ist. Dies reduziert zudem in weiter vorteilhafter Weise den Verschleiß dieser Teile.

Weiterhin ist der Steuerkolben des hydropneumatischen Bremskraftverstärkers nach der DE-AS 1 576 178 aufgrund des dort integrierten Einlaß-/Auslaßventils instabil. Die Übertragung des Arbeitsprinzips eines solchen Bremskraftverstärkers auf einen Kupplungskraftverstärker für eine Kupplungsbetätigung ist folglich ausgeschlossen. Denn der eingesteuerte pneumatische Druck wirkt sich beim Bremskraftverstärker gemäß der DE-AS 1 576 178 direkt auf den Betätigungs- bzw. Steuerkolben aus. Die Kräfte im Steuerkolben variieren folglich entsprechend dem eingesteuerten Druck. Da jedoch bei einer Kupplung keine konstante Kraft über den gesamten Betätigungsweg gegeben ist, wird am Steuerkolben ein instabiler Zustand hervorgerufen, der ein Rangieren eines Fahrzeugs mit einem solchen Kraftverstärker wesentlich erschweren würde. Eine feinfühlige Abstufung bzw. Steuerung wäre damit nicht realisierbar. Ferner müßte bei einem solchen Kraftverstärker aufgrund der Integration des Einlaß-/Auslaßventils im Steuerkolben beim Einkuppeln eine höhere Reibung überwunden werden, die sich insbesondere aufgrund der beiden Dichtringe ergibt, welche zusätzlich durch den Vorratsdruck beaufschlagt sind und die damit einhergehend eine hohe Hysteresis verursachen, was aber bei einem erfindungsgemäßen Kupplungskraftverstärker unerwünscht ist.

Demgegenüber ist bei dem erfindungsgemäßen hydropneumatischen Kupplungskraftverstärker das Einlaß-/Auslaßventil im pneumatischen Kolben bzw. im Servokolben integriert. Dieses Einlaß-/Auslaßventil dient zur Steuerung der zur Kraftverstärkung einzusteuernden Druckluft, wobei dessen Öffnen bzw. Schließen wiederum vom als Betätigungskolben ausgebildeten Stempel gesteuert wird. Damit wirkt sich-der eingesteuerte Druck nicht am Stempel selbst aus, wodurch unabhängig vom eingesteuerten Druck eine konstante Betätigungskraft anliegen kann, die somit eine besonders feinfühlige Steuerung der Kupplung ermöglicht.

Zudem benötigt das bei der vorliegenden Erfindung im pneumatischen Kolben integrierte Einlaß-/Auslaßventil in weiter vorteilhafter Weise eine geringe Öffnungskraft. Infolge der Steuerung dessen Öffnens bzw. Schließens durch den Stempel und aufgrund der geringen Öffnungskraft unterliegt auch das Öffnen und Schließen keinem Einfluß durch den eingesteuerten Druck, so daß auch hier keine Kräfteschwankungen auftreten können. Da zudem die Kraftübertragung bei der vorliegenden Erfindung vom Stempel zum hydraulischen Zylinder in direkter Durchleitung erfolgt, sind auf diese Weise unerwünschte, störende Kräfteschwankungen auch auf der Seite des hydraulischen Kolbens minimiert. Damit ist eine gewünschte, feinfühlige Steuerung der Kupplung besser zu realisieren. Ferner helfen die zum Öffnen bzw. Schließen des Einlaß/Auslaßventils erforderliche, relativ gering gehaltenen Öffnungskraft als auch die Vermeidung von Kräfteschwankungen in den vorstehend genannten Komponenten deren Verschleiß zu reduzieren, was schlußendlich die Wartungszyklen verlängern und die Kosten senken hilft.

Der hydraulische Kolben, der seinerseits über geeignete Mittel, wie beispielsweise eine Hydraulikleitung, eine Kupplungsbetätigungseinrichtung, wie beispielsweise ein am Getriebe angeordneter Geber-Zylinder oder ein im Getriebe integrierter Zentralausrücker oder dergleichen mit der erforderlichen Kupplungskraft beaufschlagen kann, folgt dabei vorteilhaft erstmals der Bewegung des pneumatischen Kolbens, der seinerseits durch eine Drucksensor-Feder gezielt gesteuert bzw. geregelt auf die über einen Stempel eingeprägten Kupplungssignale bzw. Pedalkräfte vom Kupplungspedal reagiert bzw. anspricht.

Dabei ist der Drucksensor-Feder ein Grenz- bzw. Schwellwert eingeprägt. Unterhalb dieses Schwellwertes wird ein Druck vom pneumatischen Kolben ferngehalten. Oberhalb dieses Schwellwertes wird der pneumatische Kolben mit Druck beaufschlagt und nahe um den Schwellwert wird der Druck auf den pneumatischen Kolben konstant gehalten.

Des weiteren ist bei einem Ausfall der Druckluft in vorteilhafter Weise mittels des Stabes ein direkter Kontakt vom als Betätigungskolben ausgebildeten Stempel zum hydraulischen Kolben sichergestellt, so daß auch in einem solchen Notfall eine sichere Betätigung der Kupplung gewährleistet ist.

Zudem kann ein Hydraulikbehälter für das Hydrauliköl des hydraulischen Kolbens direkt am bzw. im hydropneumatischen Kupplungskraftverstärker integriert werden, was weiter hilft, die gesamte Baugruppe möglichst kompakt zu halten.

Dieser erfindungsgemäße Kraftverstärker als auch ein damit aufgebautes erfindungsgemäßes Kraftverstärkungssystem kann selbstverständlich auch für andere Aufgaben wie beispielsweise zur Kraftverstärkung beim Einsatz anderer Vorrichtungen herangezogen werden.

Vorteilhafte Weiterbildungen der Erfindung ergeben sich aus den Unteransprüchen.

Nachfolgend werden Einzelheiten, Aspekte und weitere Vorteile der vorliegenden Erfindung anhand der Beschreibung einer beispielhaften Ausführungsform unter Bezugnahme auf die Zeichnung näher erläutert.

Es zeigt:
- Fig. 1: eine beispielhaft Ausführungsform eines erfindungsgemäßen hydropneumatischen Kupplungskraftverstärkers in einem schematischen Längsschnitt,
- Fig. 2: den in Fig. 1 dargestellten Kupplungskraftverstärker in der Ruhelage,
- Fig. 3: dieselbe Ausführungsform mit einem geringen Anfangshub des Stempels noch ohne Kraftverstärkung,
- Fig. 4: den Beginn der Kraftverstärkung,
- Fig. 5: das dynamische Ende der Kraftverstärkung.
- Fig. 6: das selbstjustierende Ende der Kraftverstärkung,
- Fig. 7: die Belastungsrücknahme, und
- Fig. 8: eine Kraftverstärkung bei der gezeigten Ausführungsform ohne anliegende Druckluft.

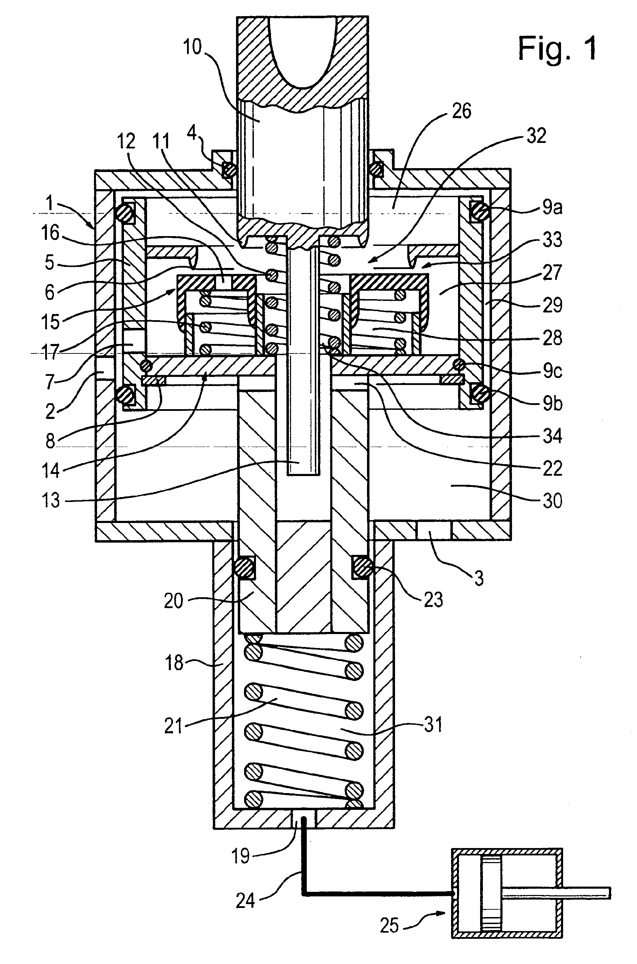

In Fig. 1 ist eine schematische Darstellung einer beispielhaften Ausführungsform des erfindungsgemäß hydropneumatischen Kupplungskraftverstärkers gezeigt. Ein zylindrisches Gehäuse 1 eines pneumatischen Kolbens verfügt über einen Lufteinlaß 2 zum Einsteuern von Druckluft sowie über einen Abluftauslaß 3 zum Absteuern von Druckluft und einen, das Gehäuse gegen einen Stempel 10 abdichtenden Dichtungsring 4, der vorzugsweise als O-Ring-Dichtung ausgebildet sein kann. Innerhalb dieses zylindrischen Gehäuses 1 ist ein darin gleitend abgedichtet angeordneter Kolben 5 vorgesehen, der seinerseits über einen Sitz 6 verfügt. Der Sitz 6 ist vorzugsweise als Dichtungs-Sitz 6 ausgebildet und ist über eine scheibenförmige Schulter radial nach innen von der Kolbenwand beabstandet. Weiterhin verfügt der Kolben 5 über einen in der Kolbenwand angeordneten Luftkanal 7, einen vorzugsweise als Klemmring 8 ausgebildeten Anschlag sowie zwei äußere Dichtungen 9a, 9b und eine innere Dichtung 9c. Diese Dichtungen sind vorzugsweise als O-Ring-Dichtung ausgebildet.

In das Gehäuse 1 ragt ein Stempel 10 hinein, der in Richtung seiner Längsachse verschieblich gelagert ist. Dieser Stempel 10 verfügt an seinem ins Innere des Gehäuses 1 weisenden Ende über einen Sitz 11, der vorzugsweise als ringförmiger Dichtungs-Sitz ausgebildet ist. Weiter in das Gehäuse 1 hinein erstreckt sich vom Stempel 10 ausgehend ein Stab 13. Der Stab 13 ist vorzugsweise coaxial bzw. gleichachsig zum Stempel 10 angeordnet. Stab 13 und Stempel 10 sind auf geeignete Weise miteinander verbunden, sie können aber auch als ein einstückiges Stempel-Stab-Element hergestellt sein. Um den Stab 13 herum erstreckt sich eine vorzugsweise als Drucksensor-Feder 12 ausgebildete Spiralfeder. Ein im wesentlichen scheibenförmiger Ventilträger 14 ist mit dem Kolben 5 über den als Klemmring 8 ausgebildeten Anschlag verbunden. Die Verbindungsstelle zwischen Ventilträger 14 und Kolben 5 ist durch die Dichtung 9c abgedichtet. Der Ventilträger verfügt über zwei benachbarte ringförmige Wände, deren Erstreckungsrichtung parallel zur Längsaches des Gehäuses 1 oder des Stempels 10 verläuft, die als Anschlag bzw. zur Abstützung entsprechender innerer und äußerer Lippen bzw. Flanken eines Einlaß-/Auslaß-Ventils 15 dienen.

Das ringförmige Einlaß-/Auslaß-Ventil 15 ist vorzugsweise aus Gummi hergestellt und weist einen im wesentlichen U-förmigen Querschnitt auf Dieses Ventil 15 weist an dessen, dem stempelseitigen Ende des Gehäuses 1 zugewandten Oberseite einen ringförmigen flachen Sitz, insbesondere einen Dichtsitz auf, der sowohl mit dem Dichtsitz 6 des Kolbens 5 als auch mit dem Dichtsitz 11 des Stempels 10 bei einem Aufeinanderliegen dicht abschließen kann. Zwischen den Durchmessern dieser beiden ringförmigen Dichtsitze ist im Ventil 15 ein als eine Druckausgleichsbohrung 16 ausgebildeter Durchlaß vorgesehen. Eine Rückhaltefeder 17 ist zwischen dem Ventilträger 14 und dem Ventil 15 eingepaßt.

An das Gehäuse 1 des pneumatischen Kolbens 5 schließt sich ein zylindrisches Gehäuse 18 eines hydraulischen Kolbens 21 an, das hierfür beispielsweise angeflanscht oder auf eine andere geeignete Weise befestigt sein kann. Das Gehäuse 18 des hydraulischen Kolbens kann aber auch Teil des zylindrischen Gehäuses 1 des pneumatischen Kolbens 5 sein. Das Gehäuse 1 und das Gehäuse 18 bilden zusammen ein sehr kompaktes, raumsparendes gemeinsames Gehäuse des hydropneumatischen Kupplungskraftverstärkers. Das Gehäuse 18 des hydraulischen Kolbens 18 verfügt über einen Auslaß 19 zum Absteuern von Hydrauliköl. Innerhalb des Hydraulikgehäuses 18 ist ein Hydraulikkolben 20 gleitend gelagert, der durch eine Rückhaltefeder 21 gegen den Ventilträger 14 Richtung Stempel 10 vorgespannt ist. Die Längsachse des Hydraulikkolbens 20 erstreckt sich parallel bzw. coaxial zur Achse des Stempels 10 oder des pneumatischen Kolbens 5, wobei der Hydraulikkolben 20 zumindest über einen Abschnitt hohl ist bzw. über eine zentrische Bohrung bzw. sacklochartige Ausnehmung verfügt, die sich ausgehend von seinem, dem Stempel 10 zugewandten Ende ins Innere erstreckt. Diese Ausnehmung bzw. Bohrung ist so dimensioniert, daß sie den Stab 13 des Stempels 10 darin mit ausreichendem Spiel gleitend aufnehmen kann. Der Kolben 20 verfügt zudem über eine radial angeordnete Rille 22, dies es der Druckluft erlaubt, vom Inneren des Kolbens 20 nach außen oder ggf in umgekehrter Richtung zu strömen. Mit einem geeigneten Dichtungsring 23, bzw. einem O-Ring wird der hydraulische Abschnitt bzw. der hydraulische Kolben 20 gegen das Gehäuse 18 zuverlässig abgedichtet.

In der hier dargestellten beispielhaften Ausführungsform wird der im Hydraulikabschnitt erzeugte Druck über eine Leitung 24, die am Gehäuse 18 des hydraulischen Kolbens 20 an einem dort angeordneten Auslaß 19 zum Absteuern des Hydrauliköls angeschlossen ist, einer Kupplungsbetätigungseinrichtung 25, die beispielsweise als am Getriebe angeordneter Geber-Zylinder oder als im Getriebe integrierter Zentralausrücker ausgestaltet sein kann, aufgeprägt.

Eine Druck-Schubkammer 25 wird durch den inneren Umfang des Pneumatikzylinders 1, den Sitzes 11 des Stempels 10 als auch durch selbigen, den Sitz 6 und den Dichtungsring 9a des Kolbens 5 abgegrenzt bzw. definiert.

Eine Luftzufuhrkammer 29, die mit dem Einlaß 2 verbunden ist, wird durch den inneren Umfang des Zylinders 1 und durch die beiden O-Ringe 9a und 9b als auch durch den Kolben 5 begrenzt bzw. definiert.

Eine weitere Luftzufuhrkammer 27, der beispielsweise Druckluft durch das Loch 7 im Kolben 5 zugeführt wird, ist durch den Innenumfang des Kolbens 5, dessen Sitz 6, dessen inneren O-Ring 9c und die äußere Lippe bzw. Flanke des Ventils 15 begrenzt.

Eine Kompensationskammer 28, die den Druck oberhalb und innerhalb des aus Gummi hergestellten Ventils 15 ausgleicht, ist durch die inneren und äußeren Lippen bzw. Flanken des Ventils 15 als auch durch das Ventil 15 selbst und die beiden vom Ventilträger 14 gehaltenen Wände begrenzt.

Eine Ablufkammer 30 ist durch den inneren Umfang und den unteren Deckel des Pneumatikzylinders 1, die O-Ringe 9b und 9c des Kolbens 5, den Hydraulikkolben 20 und dessen O-Ring 23 begrenzt bzw. definiert.

Eine Hydraulikkammer 31 ist durch den inneren Umfang und den Boden des Zylinders 18 umschlossen und begrenzt durch den Hydraulikkolben 20 und dessen O-Ring 23.

Ein variabler Abluft-Durchlaß 32 liegt zwischen dem Dichtungssitz 11 des Stempels 10 und der gegenüberliegenden Oberfläche des Ventils 15. Ein variabler Lufteinlaß-Durchlaß 33 liegt zwischen dem Dichtungssitz des pneumatischen Kolbens 5 und der gegenüberliegenden Oberfläche des Ventils 15. Ein fixer bzw. unveränderlicher Abluft-Durchlaß ist begrenzt durch den Dichtungssitz 11 des Stempels 10, dessen Stab 13 die innere ringförmige Wand des Ventilsträgers 14 und den inneren Umfang des Hydraulikkolbens 20.

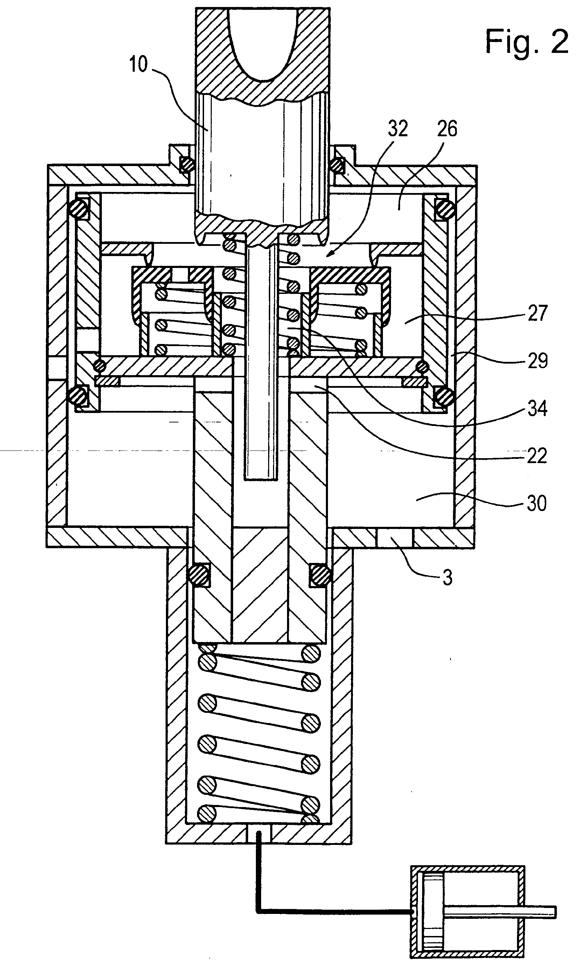

In Fig. 2 ist die Ruhelage der in Fig. 1 dargestellten Ausführungsform des erfindungsgemäßen hydropneumatischen Kupplungskraftverstärkers gezeigt. Dieser Krupplungskraftverstärker wird durch ein nicht näher gezeigtes Luftzufuhrreservoir gespeist. Die von außerhalb zugeführte Druckluft ist in den Kammern 29 und 27 gehalten. In einer zurückgezogenen bzw. weitestgehend herausgezogenen Position des Stempels 10 ist der Durchlaß 32 offen und damit die Schubkammer 26 gegen die Atmosphäre belüftet, und zwar durch den offenen Durchlaß 32, den Spalt 34, den Durchlaß 22, die Abluftkammer 30 und den Abluftauslaß 3. Damit steht der Hydraulikabschnitt in dieser Konstellation nicht unter Druck.

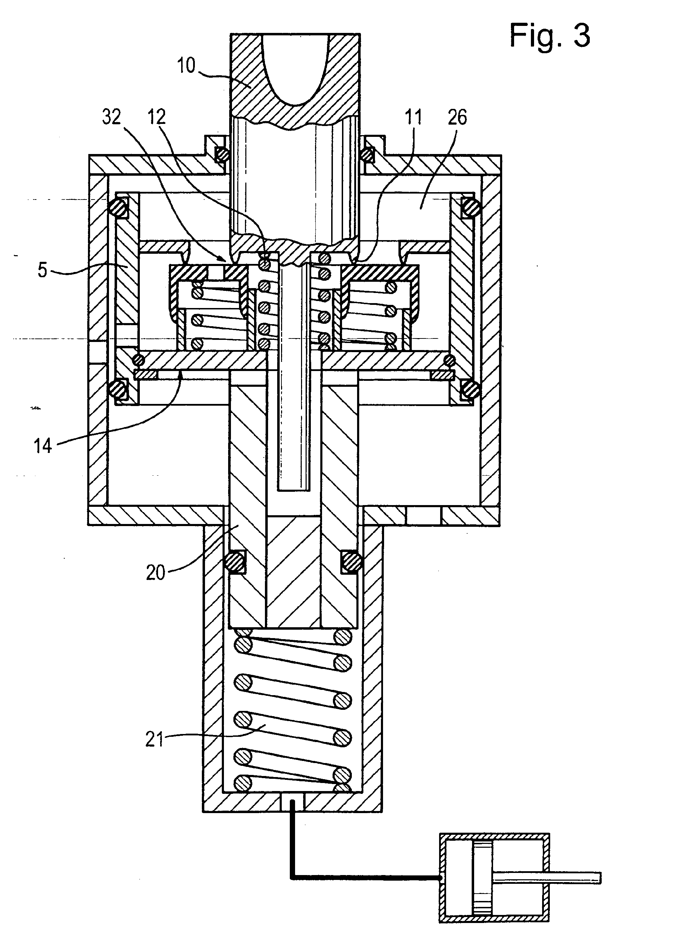

Fig. 3 zeigt den hydropneumatischen Kupplungskraftverstärker mit einem geringen Anfangshub des Stempels 14. Der Stempel 10 ist gegen die Drucksensor-Feder 12 geschoben, und zwar mit einer Last, die gleich dem Schwellwert ist. Bei diesem Vorgang schiebt die Feder 12 den Ventilträger 14, den pneumatischen Kolben 5 und den hydraulischen Kolben 20 gegen die Feder 21 und arbeitet damit gegen den hydraulischen Druck, der nunmehr durch die Bewegung des Kolbens 20 innerhalb des Hydraulikzylinders 18 aufgebaut wird. Zur selben Zeit wird die Sensor-Feder 12 aufgrund der durch den Stempel 10 aufgeprägten Last verkürzt, so daß der Sitz 11 des Stempels 10 die Oberfläche des aus Gummi hergestellten Ventils 14 berührt, und damit den Abluftdurchlaß 32 verschließt. In dieser Konfiguration ist die Kammer 26 nicht mehr gegen die Atmosphäre entlüftet.

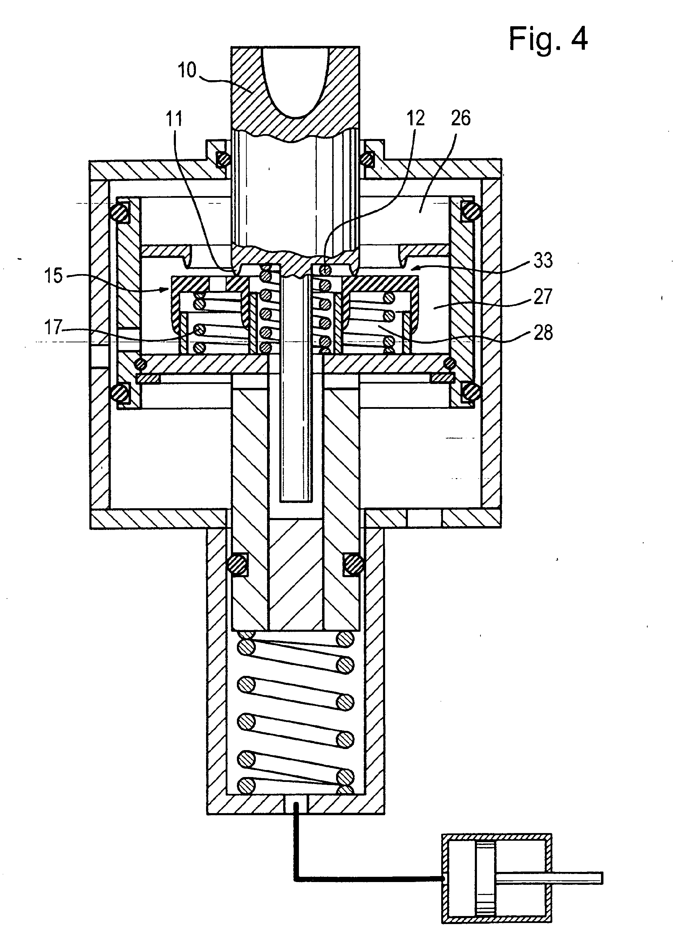

In Fig. 4 ist der Beginn der Kraftverstärkung gezeigt, wobei dieselben Kolbenpositionen, wie in Fig. 3 dargestellt, vorliegen. Allerdings ist der Stempel 10 ein wenig mehr belastet bzw. mit einer etwas größeren Kupplungspedalkraft beaufschlagt. Die Erhöhung der Last verkürzt erneut die Feder 12 in solch einer Weise, daß der Sitz 11 das Gummiventil 15 gegen seine Feder 17 drückt, und damit den Durchlaß 33 zwischen dem Sitz 6 und dem Gummiventil 15 für eine Luftzufuhr freigibt. Durch den so entstehenden Durchlaß 33 gelangt etwas Luft bzw. Druckluft aus der Kammer 27 in die Kammer 26, was dort zu einer Druckzunahme führt. Derselbe Druck gelangt in die Kammer 28 unter dem Ventil 15, um dieses auszubalancieren bzw. druckdifferenzfrei zu halten.

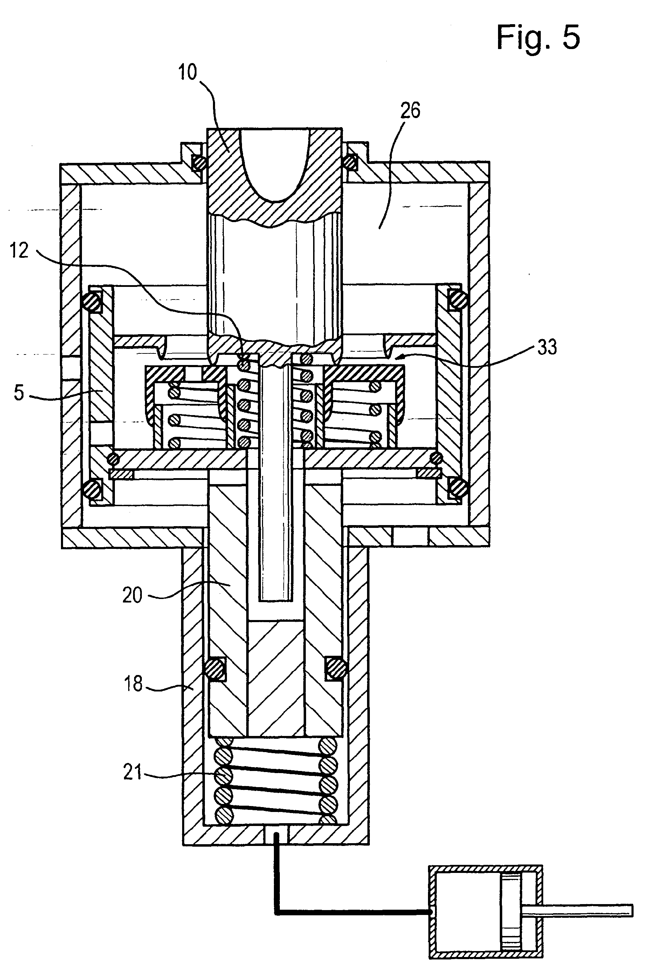

In Fig. 5 ist das dynamische Ende der Kraftverstärkung dargestellt. Dabei liegt ein ausgehend von der in Fig. 4 gezeigten Konfiguration zu jener in Fig. 5 dargestellten Konfiguration wie nachfolgend angegebenes Kräftegleichgewicht vor:

Die durch den Stempel 10 über die Sensor-Feder 12 eingeprägte mechanische Kraft (die über dem Schwellwert der Drucksensor-Feder 12 liegt) plus die pneumatische Druckkraft (also der in der Kammer 26 vorherrschende Druck multipliziert mit dem effektiven Querschnitt des Kolbens 5) entspricht der Reaktionskraft der Feder 21 plus dem hydraulischen Druck im Hydraulikzylinder 18 multipliziert mit dem effektiven Querschnitt des Kolbens 20.

Dies bedeutet, daß während der Bewegung der Kolben, solange die Kraft auf den Stempel 10 mehr oder weniger konstant bleibt, der Druck in der Kammer 26 sich selbst moduliert, um den Anstieg der Reaktionskräfte auszugleichen. Diese Druckmodulation ist durch eine Selbstanpassung des Durchlasses 32 automatisch selbstausführend. Falls der Druck in der Kammer 28 tatsächlich nicht ausreichend groß sein sollte, um den pneumatischen Kolben 5 mit derselben Geschwindigkeit zu schieben bzw. zu bewegen, wie die Geschwindigkeit des durch die Kupplungspedalkraft ins Gehäuse 1 hineingeschobenen Stempels 10, nimmt der Druckluftzufuhrdurchlaß 33 automatisch zu, wobei damit ein größerer Luftdurchsatz verursacht wird, und folglich ein höherer Druck in der Kammer 26 entsteht. Umgekehrt wird der Druck in der Kammer 26 durch eine Reduzierung des Durchlasses 33 verringert, falls die Geschwindigkeit des Kolbens langsamer ist als jene des Stempels 10.

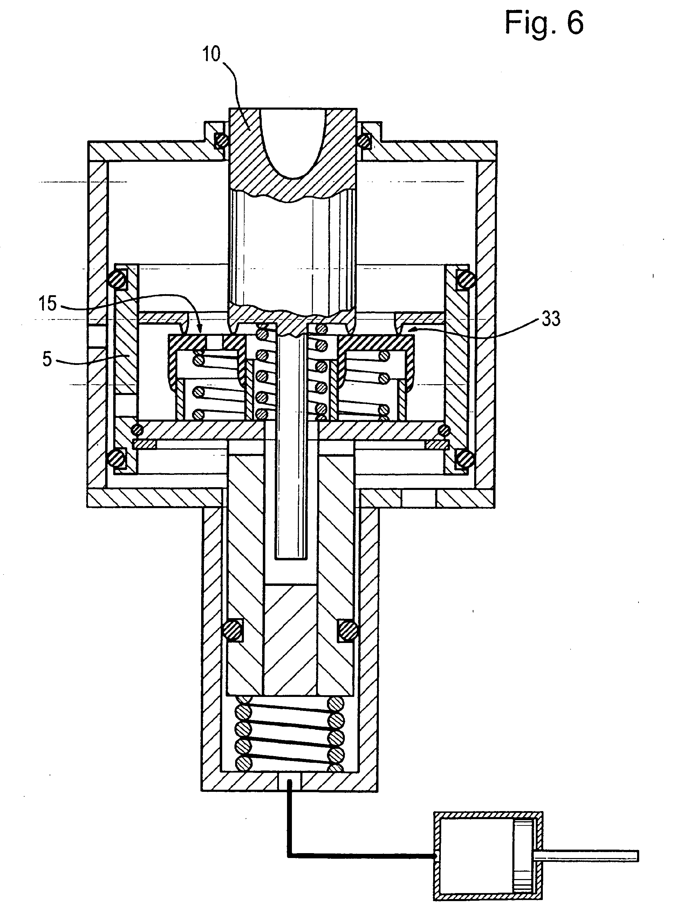

In Fig. 6 ist das Ende der Kraftverstärkung im selbstregelnden Fall dargestellt. Der Stempel 10 ist in derselben Position wie in Fig. 5 gezeigt, aber nachdem seine Bewegung gestoppt wurde. Aufgrund der vorstehend diskutierten Konfiguration wird der pneumatische Kolben alle anderen mit ihm verbundenen Teile um ein geringes Maß nach unten bewegen, so daß der Durchlaß 33 gegen das Gummiventil 15 geschlossen wird.

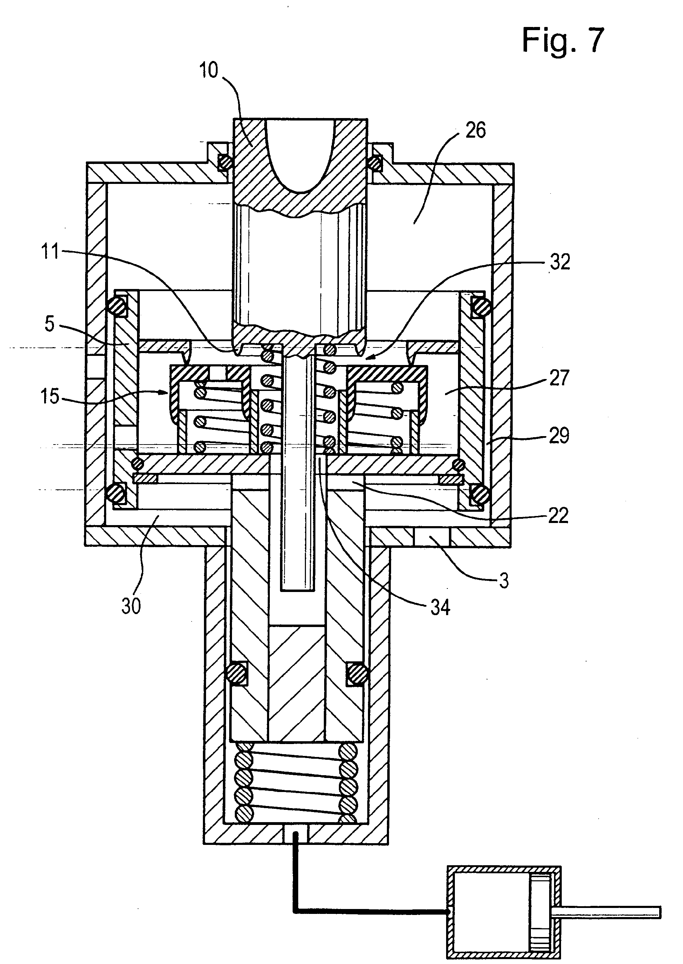

In Fig. 7 wird die Rücknahme der Kraftbeaufschlagung näher gezeigt, nämlich dann, wenn der Stempel 10 in seine Ausgangslage zurückgeführt wird. Diese Situation entspricht derjenigen bei der Bewegung in die umgekehrte Richtung, wobei jetzt die Anpassung der Durchlässe zwischen dem Abluftsitz 11 und dem Gummiventil 15 geschieht. Der Druck in der Kammer 26 wird entsprechend der jeweiligen Position des Stempels 10 und des Kolbens 5 mit einer höheren oder geringeren Geschwindigkeit reduziert. Die Abluft folgt denselben Durchlässen und strömt in denselben Richtungen wie es bereits vorstehend in Fig. 2 zur Ruhelage beschrieben worden ist.

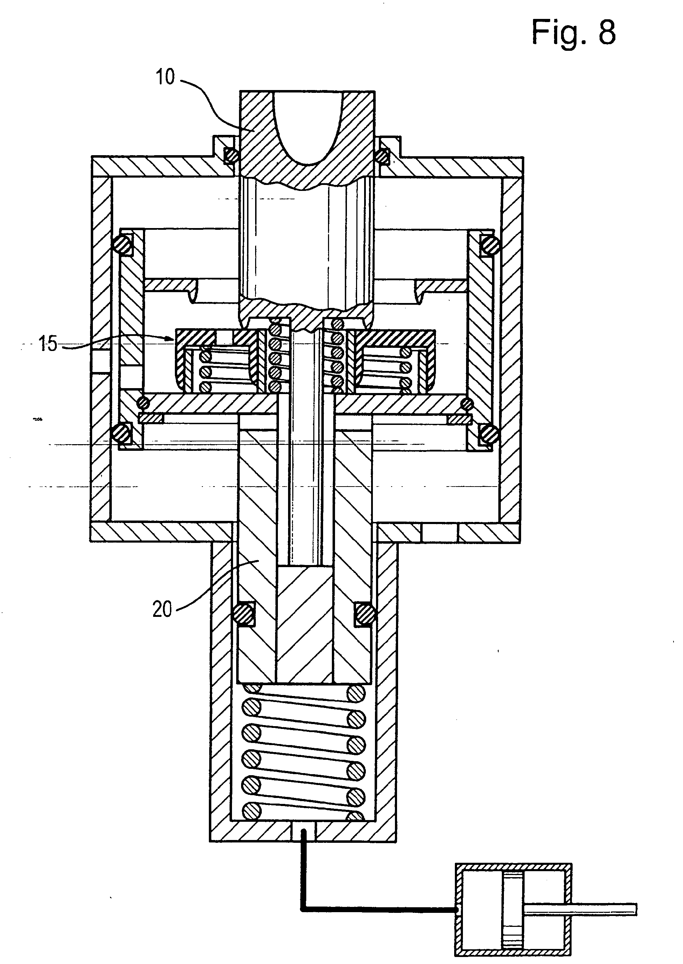

Im Falle eines Defektes im Druckluftkreis bzw. im pneumatischen Kreislauf ist die Aktivierung der Kupplungsbetätigungseinrichtung 25 trotzdem durch mechanische Mittel gesichert, wie dies in Fig. 8 näher gezeigt ist. Aufgrund der fehlenden Unterstützung durch die Druckluft, die bei diesem Beispiel angenommen durch einen Defekt im pneumatischen Kreislauf nicht anliegt, schiebt der Stempel 10 den hydraulischen Kolben 20 über den Stab 13 vor sich her, nachdem er das Ventil 15 vollständig geöffnet hat.

Der erfindungsgemäße Kraftverstärker kann für vielfältige Einsatzzwecke angepaßt werden und eignet sich insbesondere für die Verstärkung von Pedalkräften zum Betätigen einer Kupplung eines Fahrzeuges, wie z.B. eines Nutzfahrzeuges.

Die vorliegende Erfindung schafft somit einen hydropneumatischen Kraftverstärker, insbesondere einen Kupplungskraftverstärker für Kraftfahrzeuge, mit einem in einem zylindrischen Gehäuse angeordneten pneumatischen Kolben und einem in einem weiteren zylindrischen Gehäuse angeordneten hydraulischen Kolben. Dabei ist das hydraulische Gehäuse beispielsweise am pneumatischen Gehäuse angeflanscht oder auf andere geeignete Weise damit verbunden, oder auch Teil desselbigen, so daß ein gemeinsames, platzsparendes kompaktes Gehäuse des hydropneumatischen Kupplungskraftverstärkers ausgebildet wird. Ein Stempel ist im pneumatischen Gehäuse gleitend so angeordnet, daß er mittels einer Drucksensor-Feder und im Zusammenwirken mit einem im pneumatischen Kolben integrierten Einlaß/Auslaß-Ventil für eine zur Kraftverstärkung einzusteuernde Druckluft, dessen Öffnen bzw. Schließen vom Betätigungskolben gesteuert wird, über den pneumatischen Kolben auf den hydraulischen Kolben steuernd einwirkt, um ein ihm eingeprägtes Kupplungssignal bzw. eine durch ein Kupplungspedal aufgeprägte Pedalkraft ab einem Schwellwert gezielt zu verstärken, so daß hierüber eine Kupplung betätigt werden kann.

## Patentansprüche

1. Hydropneumatischer Kupplungskraftverstärker zum Erzeugen einer für die Betätigung einer Kupplung ausreichend großen Kraft, insbesondere für Kraftfahrzeuge, mit einem in einem zylindrischen Gehäuse (1) als Servokolben angeordneten pneumatischen Kolben (5) und einem in einem weiteren zylindrischen Gehäuse (18) angeordneten, hydraulischen Kolben (20), wobei das pneumatische Gehäuse (1) zusammen mit dem hydraulischen Gehäuse (18) als ein gemeinsames, kompaktes Gehäuse des hydropneumatischen Kupplungskraftverstärkers ausgebildet ist, und wobei ein als Betätigungskolben ausgebildeter Stempel (10) im pneumatischen Gehäuse (1) so angeordnet ist, dass er mittels einer Drucksensor-Feder (12) und im Zusammenwirken mit einem im pneumatischen Kolben (5) integrierten Einlass/Auslass-Ventil (15), dessen Öffnen bzw. Schließen vom Betätigungskolben (10) gesteuert wird, über den pneumatischen Kolben (5) auf den hydraulischen Kolben (20) steuernd einwirkt, um ein ihm eingeprägtes Kupplungssignal ab einem Schwellwert gezielt zu verstärken,
**dadurch gekennzeichnet, dass**
- der Stempel (10) im pneumatischen Gehäuse (1) gleitend abgedichtet ist,
- das Ein-/Auslass-Ventil (15) für die Einsteuerung einer Druckluft zur Kraftverstärkung angepasst ist, und
- unterhalb des Schwellwerts der hydraulische Kolben (20) mittels des Stempels (10) über die Drucksensor-Feder (12) und den pneumatischen Kolben (5) bewegbar ist.

2. Hydropneumatischer Kupplungskraftverstärker nach Anspruch 1, **dadurch gekennzeichnet, daß** der Stempel (10) einen Stab (13) aufweist, der in eine im hydraulischen Kolben (20) vorgesehene entsprechende Ausnehmung hinein auskragt.

3. Hydropneumatischer Kupplungskraftverstärker nach Anspruch 1 oder 2, **dadurch gekennzeichnet, daß** bei einem Ausfall der Druckluft mittels des Stabes (13) der direkte Kontakt vom als Betätigungskolben ausgebildeten Stempel (10) zum hydraulischen Kolben (20) erhalten bleibt.

4. Hydropneumatischer Kupplungskraftverstärker nach einem der Ansprüche 1 bis 3, **dadurch gekennzeichnet, daß** der Stempel (10) einen sich parallel zum Stab (13) erstreckenden ringförmigen Dichtungs-Sitz (11) aufweist, der auf das Einlaß/Auslaß-Ventil (15) einwirkt.

5. Hydropneumatischer Kupplungskraftverstärker nach einem der Ansprüche 1 bis 4, **dadurch gekennzeichnet, daß** im Kolben (5) ein Ventilträger (14) angeordnet, insbesondere mittels eines Anschlages, vorzugweise eines Klemmrings (8) mit diesem verbunden ist.

6. Hydropneumatischer Kupplungskraftverstärker nach einem der Ansprüche 1 bis 5, **dadurch gekennzeichnet, daß** der Kolben (5) mit einem ringförmigen Dichtungs-Sitz (6) versehen ist, der auf das Einlaß/Auslaß-Ventil (15) einwirkt.

7. Hydropneumatischer Kupplungskraftverstärker nach einem der Ansprüche 1 bis 6, **dadurch gekennzeichnet, daß** sich der pneumatische Kolben (5) mittels des Ventilträgers (14) gegen den hydraulischen Kolben (20) abstützt, wobei die so erzeugte Baugruppe mittels einer im Gehäuse (18) angeordneten Rückhaltefeder (21) vorgespannt wird.

8. Hydropneumatischer Kupplungskraftverstärker nach einem der Ansprüche 1 bis 7, **dadurch gekennzeichnet, daß** die Drucksensor-Feder (12) zwischen dem Stempel (10) und dem pneumatischen Kolben (5) um den Stab (13) herum angeordnet ist, wobei sie sich einerseits gegen den Stempel (10) und andererseits gegen den Ventilträger (14) abstützt und letzteren gegen den hydraulischen Kolben (20) vorspannt.

9. Hydropneumatischer Kupplungskraftverstärker nach einem der Ansprüche 1 bis 8, **dadurch gekennzeichnet, daß** der Ventilträger (14) zwei ringförmige Wandungen aufweist, gegen die sich entsprechende Flanken bzw. Lippen des ringförmigen Einlaß/AuslaßVentils (15), das vorzugsweise aus Gummi hergestellt ist, abstützen.

10. Hydropneumatischer Kupplungskraftverstärker nach einem der Ansprüche 1 bis 9. **dadurch gekennzeichnet, daß** das Einlaß/Auslaß-Ventil (15) wenigstens eine Bohrung (16) aufweist.

11. Hydropneumatischer Kupplungskraftverstärker nach einem der Ansprüche 1 bis 10, **dadurch gekennzeichnet, daß** das Einlaß/Auslaß-Ventil (15) zusammen mit dem Ventilträger (14) und den von ihm getragenen Wandungen einen ringförmigen Druckausgleichsraum (28) abgrenzt, in dem eine sich gegen den Ventilträger (14) und das Einlaß/Auslaß-Ventil (15) abstüztende Rückhaltefeder (17) angeordnet ist.

12. Hydropneumatischer Kupplungskraftverstärker nach einem der Ansprüche 1 bis 11, **dadurch gekennzeichnet, daß** der pneumatische Kolben (5) gegen dessen Gehäuse (1) mit wenigstens zwei Dichtungen (9a; 9b), vorzugweise O-Ring-Dichtungen abgedichtet ist, so daß eine erste Luftzufuhrkammer (29) entsteht, die mit einem im Gehäuse (1) angeordneten Lufteinlaß (2) zum Einsteuern der Druckluft und einem im Kolben (5) angeordneten Luftkanal (7) in Verbindung steht.

13. Hydropneumatischer Kupplungskraftverstärker nach einem der Ansprüche 1 bis 12, **dadurch gekennzeichnet, daß** der pneumatische Kolben (5) gegen den Ventilträger (14) mit wenigstens einer Dichtung (9c), vorzugweise O-Ring-Dichtung abgedichtet ist, so daß eine Druck-Schubkammer (26) begrenzt ist, in die der Stempel (10) hineinragt.

14. Hydropneumatischer Kupplungskraftverstärker nach einem der Ansprüche 1 bis 13, **dadurch gekennzeichnet, daß** der pneumatische Kolben (5) gegen den Ventilträger (14) und dessen einer Wandung zusammen mit wenigstens einem Teil des Einlaß/AuslaßVentils (15) und dem Dichtungs-Sitz (6) des Kolbens (5) eine zweite Luftzufuhrkammer (27) ausbildet.

15. Hydropneumatischer Kupplungskraftverstärker nach einem der Ansprüche 1 bis 14, **dadurch gekennzeichnet, daß** das Gehäuse (1) des pneumatischen Kolbens (5) zusammen mit einem Abschnitt von diesem und dem Ventilträger (14) eine Abluftkammer (30) ausbildet, die über wenigstens einen im Gehäuse (1) angeordneten Abluftauslaß (3) zum Absteuern von Druckluft verfügt.

16. Kupplungssystem bestehend aus einem kompakten hydropneumatischen Kupplungskraftverstärker nach wenigstens einem der Ansprüche 1 bis 15, **dadurch gekennzeichnet, daß** das vom Stempel (10) eingeprägte und durch den Kupplungskraftverstärker verstärkte Kupplungssignal über eine Leitung (24), die an einem am Gehäuse (18) des hydraulischen Kolbens (20) angeordneten Auslaß (19) zum Absteuern von Hydrauliköl angeschlossene ist, einer Kupplungsbetätigungseinrichtung (25) aufgeprägt wird, um die Kupplung zu betätigen.

17. Kupplungssystem nach Anspruch 16, **dadurch gekennzeichnet, daß** die Kupplungsbetätigungseinrichtung (25) ein am Getriebe angeordneter Geber-Zylinder oder ein im Getriebe integrierter Zentralausrücker ist.

18. Kupplungssystem nach Anspruch 16 oder 17, **dadurch gekennzeichnet, daß** ein Hydraulikbehälter für das Hydrauliköl des hydraulischen Kolbens (20) am hydropneumatischen Kupplungskraftverstärker integriert ist.

19. Verfahren zum Verstärken einer an einem hydropneumatischen Kupplungskraftverstärker nach wenigstens einem der Ansprüche 1 bis 15 anliegenden Pedalkraft, wobei die Pedalkraft über einen in einem Gehäuse (1) verschieblich gelagerten, als Betätigungskolben ausgebildeten Stempel (10) auf eine Drucksensor-Feder (12) übertragen wird, die in Abhängigkeit von einem ihr innewohnenden Schwellwert die ihr eingeprägte Kraft auf einen als Servokolben ausgebildeten pneumatischen Kolben (5) überträgt, dass mittels des Stempels (10) im Zusammenwirken mit einem im pneumatischen Kolben (5) integrierten Einlass/Auslass-Ventil (15), das Öffnen bzw. Schließen des Einlass/Auslass-Ventils (15) vom Betätigungskolben (10) gesteuert wird, und dass der pneumatische Kolben (5) seinerseits mit einem in einem Gehäuse (18) verschieblich gelagerten hydraulischen Kolben (18) in Wirkzusammenhang steht, so dass über diesen eine Betätigungseinrichtung, insbesondere eine Kupplungsbetätigungseinrichtung (25) betätigt werden kann,
**dadurch gekennzeichnet, dass**
- der Stempel (10) im pneumatischen Gehäuse (1) gleitend abgedichtet ist,
- mittels des Ein-/Auslass-Ventils (15) Druckluft eingesteuert wird, und
- unterhalb des Schwellwerts der hydraulische Kolben (20) mittels des Stempels (10) über die Drucksensor-Feder (12) und den pneumatischen Kolben (5) bewegt wird.

20. Verfahren nach Anspruch 19, **dadurch gekennzeichnet, daß** beim Überschreiten des Schwellwerts der Drucksensor-Feder (12) Druckluft aus einem Druckluftreservoir dem hydropneumatischen Kraftverstärker zugeführt wird, so daß diese auf den pneumatischen Kolben (5) einwirken kann.

21. Verfahren nach Anspruch 19 oder 20, **dadurch gekennzeichnet, daß** die Drucksensor-Feder (12) über einen Ventilträger (14) auf den pneumatischen Kolben (5) und auf den hydraulischen Kolben (18) einwirkt.

22. Verfahren nach einem der Ansprüche 19 bis 21, **dadurch gekennzeichnet, daß** mittels eines am Stempel (10) angeordneten Dichtungssitzes (11), der mit einem ihm zugeordneten ersten Dichtungssitz des vom Ventilträger (14) getragenen Einlaß-/Auslaß-Ventils (15) zusammenwirkt sowie mittels eines am Kolben (5) angeordneten Dichtungssitzes (6), der mit einem ihm zugeordneten zweiten Dichtungssitz des Ventils (15) zusammenwirkt, das Ein- bzw. Abströmen der Druckluft in Abhängigkeit vom Schwellwert der Drucksensor-Feder (12) geregelt wird.

23. Verfahren nach einem der Ansprüche 19 bis 22, **dadurch gekennzeichnet, daß** die Pedalkraft vom Kupplungspedal ohne Zwischenschaltung einer zusätzlichen Hydraulik in den Kraftverstärker eingeleitet wird.

## Claims

1. A hydro-pneumatic clutch booster for generating a force sufficiently great to actuate a clutch, in particular for motor vehicles, having a pneumatic piston (5) positioned in a cylindrical housing (1) as a servo piston and a hydraulic piston (20) positioned in a further cylindrical housing (18), the pneumatic housing (1) being designed together with the hydraulic housing (18) as a common, compact housing for the hydro-pneumatic clutch booster, and a ram (10) designed as an actuating piston being positioned in the pneumatic housing (1) in such a manner that it acts on the pneumatic piston (20) in a controlling manner via the pneumatic piston (5) by means of a pressure sensor spring (12) and in co-operation with an inlet/outlet valve (15), said valve (15) being integrated in the pneumatic piston (5) and opened and closed by the actuating piston (10), in order to boost a clutch signal impressed on it in a specific manner with effect from a threshold value,
**characterised in that**
- the ram (10) is sealed in the pneumatic piston in such a manner that it is able to slide,
- the inlet/outlet valve (15) is adapted for the controlled introduction of compressed air for power boosting, and
- below the threshold value the hydraulic piston (20) can be moved via the pressure sensor spring (12) and the pneumatic piston (5) by means of the ram (10).

2. A hydro-pneumatic clutch booster in accordance with claim 1,
**characterised in that**
the ram (10) has a bar (13) which protrudes into a corresponding recess provided in the hydraulic piston (20).

3. A hydro-pneumatic clutch booster in accordance with claim 1 or 2,
**characterised in that**
in the event of a compressed air failure, the direct contact between the ram (10) designed as an actuating piston and the hydraulic piston (20) is maintained by means of the bar (13).

4. A hydro-pneumatic clutch booster in accordance with one of claims 1 to 3,
**characterised in that**
the ram (10) has an annular seal seat (11) which extends parallel to the bar (13) and acts on the inlet/outlet valve (15).

5. A hydro-pneumatic clutch booster in accordance with one of claims 1 to 4,
**characterised in that**
positioned in the piston (5), in particular connected thereto by means of a stop, preferably a clamping ring (8), is a valve support (14).

6. A hydro-pneumatic clutch booster in accordance with one of claims 1 to 5,
**characterised in that**
the piston (5) is provided with an annular seal seat (6) which acts on the inlet/outlet valve (15).

7. A hydro-pneumatic clutch booster in accordance with one of claims 1 to 6,
**characterised in that**
the valve support (14) in the pneumatic piston (5) rests on the hydraulic piston (20), the sub-assembly thus formed being pre-tensioned by means of a retaining spring (21) positioned in the housing (18).

8. A hydro-pneumatic clutch booster in accordance with one of claims 1 to 7,
**characterised in that**
the pressure sensor spring (12) is positioned between the ram (10) and the pneumatic piston (5) around the bar (13), resting on one hand on the ram (10) and on the other on the valve support (14), the latter being pre-tensioned against the hydraulic piston (20).

9. A hydro-pneumatic clutch booster in accordance with one of claims 1 to 8,
**characterised in that**
the valve support (14) has two annular walls on which rest corresponding flanks or lips of the annular inlet/outlet valve (15) which is preferably made of rubber.

10. A hydro-pneumatic clutch booster in accordance with one of claims 1 to 9,
**characterised in that**
the inlet/outlet valve (15) has at least one hole (16).

11. A hydro-pneumatic clutch booster in accordance with one of claims 1 to 10,
**characterised in that**
the inlet/outlet valve (15) together with the valve support (14) and the walls it supports delimit an annular pressure equalisation chamber (28) in which is positioned a retaining spring (17) which rests on the valve support (14) and the inlet/outlet valve (15).

12. A hydro-pneumatic clutch booster in accordance with one of claims 1 to 11,
**characterised in that**
the pneumatic piston (5) is sealed against its housing (1) with at least two seals (9a; 9b), preferably O-ring seals, in such a manner as to create a first air supply chamber (29) which is connected to an air inlet (2) positioned in the housing (1) for the controlled introduction of compressed air and to an air duct (7) positioned in the piston (5).

13. A hydro-pneumatic clutch booster in accordance with one of claims 1 to 12,
**characterised in that**
the pneumatic piston (5) is sealed against the valve support (14) with only one seal (9c), preferably an O-ring seal, in such a manner as to delimit a pressure thrust chamber (26) into which the ram (10) projects.

14. A hydro-pneumatic clutch booster in accordance with one of claims 1 to 13,
**characterised in that**
the pneumatic piston (5) resting on the valve support (14) and one of its walls, together with at least one part of the inlet/outlet valve (15) and the seal seat (6) of the piston (5), form a second air supply chamber (27).

15. A hydro-pneumatic clutch booster in accordance with one of claims 1 to 14,
**characterised in that**
the housing (1) of the pneumatic piston (5) together with a section thereof and the valve support (14) form an air discharged chamber (30) which has at least one air discharge outlet (3) positioned in the housing (1) for the controlled discharging of compressed air.

16. A clutch system consisting of a compact hydro-pneumatic clutch booster in accordance with at least one of claims 1 to 15,
**characterised in that**
the clutch signal impressed by the ram (10) and boosted by the hydro-pneumatic clutch booster is impressed via a line (24), which is connected to an outlet (19) positioned on the housing (18) of the hydraulic piston (20) for the controlled discharging of hydraulic oil, on to a clutch actuating device (25) in order to actuate the clutch.

17. A clutch system in accordance with claim 16,
**characterised in that**
the clutch actuating device (25) is a master cylinder positioned on the transmission or a central release device integrated in the transmission.

18. A clutch system in accordance with claim 16 or 17,
**characterised in that**
integrated in the hydro-pneumatic clutch booster is a hydraulic container for the hydraulic oil of the hydraulic piston (20).

19. A process for boosting a pedal force present at a hydro-pneumatic clutch booster in accordance with at least one of claims 1 to 15, the pedal force being transmitted via a ram (10), which is designed as an actuating piston and mounted in a housing (1) in such a manner that it is able to move, to a pressure sensor spring (12) which transmits the force impressed upon it dependent on an inherent threshold value to a pneumatic piston (5) designed as a servo piston, the opening and closing of the inlet/outlet valve (15) being controlled by the actuating piston (10) by means of the ram (10) in co-operation with an inlet/outlet valve (15) integrated in the pneumatic piston (5), and the pneumatic piston (5) itself standing in an active relationship to a hydraulic piston (18) which is mounted in a housing (18) in such a manner that it is able to move such that it can be used to actuate an actuating device, in particular a clutch actuating device (15),
**characterised in that**
- the ram (10) is sealed in the pneumatic housing (1) in such a manner that it is able to slide,
- compressed air is introduced in a controlled manner by means of an inlet/outlet valve (15), and
- below the threshold value the hydraulic piston (20) is moved by means of the ram (10) via the pressure sensor spring (12) and the pneumatic piston (5).

20. A process in accordance with claim 19,
**characterised in that**
when the threshold value of the pressure sensor spring (12) is exceeded, compressed air from a compressed air reservoir is fed to the hydro-pneumatic clutch booster in such a manner that the latter is able to act on the pneumatic piston (5).

21. A process in accordance with claim 19 or 20,
**characterised in that**
the pressure sensor spring (12) acts on the pneumatic piston (5) and on the hydraulic piston (18) via a valve support (14).

22. A process in accordance with one of claims 19 to 21,
**characterised in that**
the inflow and outflow of compressed air is regulated dependent on the threshold value of the pressure sensor spring (12) by means of a seal seat (11) positioned on the ram (10) which co-operates with a corresponding first seal seat of the inlet/outlet valve (15) supported by the valve support (14) and by means of a seal seat (6) positioned on the piston (5) which co-operates with a corresponding second seal seat of the valve (15).

23. A process in accordance with one of claims 19 to 22,
**characterised in that**
the pedal force from the clutch pedal passes directly to a supplementary hydraulic system in the booster.

## Revendications

1. Dispositif hydropneumatique d'assistance de force d'embrayage destiné à engendrer une force suffisamment grande pour l'actionnement d'un embrayage, notamment destiné à un véhicule automobile, comprenant un piston (5) pneumatique agencé en tant que piston d'assistance dans un carter (1) cylindrique, et un piston (20) hydraulique agencé dans un autre carter (18) cylindrique, le carter (1) pneumatique étant réalisé de manière regroupée avec le carter (18) hydraulique sous la forme d'un carter commun, compact, du dispositif hydropneumatique d'assistance de force d'embrayage, et un plongeur (10) sous forme de piston d'actionnement étant disposé dans le carter (1) pneumatique de façon telle, qu'il agisse, en le commandant, sur le piston (20) hydraulique par l'intermédiaire du piston (5) pneumatique, au moyen d'un ressort (12) de détecteur de pression et en coopérant avec une soupape d'entrée/sortie (15) intégrée au piston (5) pneumatique et dont l'ouverture et respectivement la fermeture sont commandées par le piston d'actionnement (10), ceci en vue d'amplifier de manière ciblée à partir d'une valeur de seuil, un signal d'embrayage qui lui est appliqué,
**caractérisé en ce que**
- le plongeur (10) est rendu étanche par glissement dans le carter (1) pneumatique,
- la soupape d'entrée/sortie (15) est adaptée à faire entrer de l'air comprimé pour l'amplification ou l'assistance de force, et
- en-dessous de la valeur de seuil, le piston (20) hydraulique peut être déplacé au moyen du plongeur (10), par l'intermédiaire du ressort (12) de détecteur de pression et le piston (5) pneumatique.

2. Dispositif hydropneumatique d'assistance de force d'embrayage selon la revendication 1, **caractérisé en ce que** le plongeur (10) présente une tige (13) qui s'engage à l'intérieur d'un évidement correspondant prévu dans le piston (20) hydraulique.

3. Dispositif hydropneumatique d'assistance de force d'embrayage selon la revendication 1 ou 2, **caractérisé en ce que** dans le cas d'une panne d'air comprimé, le contact direct du plongeur (10), réalisé en tant que piston d'actionnement, au piston (20) hydraulique, reste conservé à l'aide de la tige (13).

4. Dispositif hydropneumatique d'assistance de force d'embrayage selon l'une des revendications 1 à 3, **caractérisé en ce que** le plongeur (10) présente un siège d'étanchéité (11) de forme annulaire, qui s'étend parallèlement à la tige (13) et agissant sur la soupape d'entrée/sortie (15).

5. Dispositif hydropneumatique d'assistance de force d'embrayage selon l'une des revendications 1 à 4, **caractérisé en ce qu'**un support de soupape (14) est agencé dans le piston (5) et est relié à celui-ci au moyen d'une butée, de préférence une bague d'arrêt (8).

6. Dispositif hydropneumatique d'assistance de force d'embrayage selon l'une des revendications 1 à 5, **caractérisé en ce que** le piston (5) est pourvu d'un siège d'étanchéité (6) de forme annulaire qui agit sur la soupape d'entrée/sortie (15).

7. Dispositif hydropneumatique d'assistance de force d'embrayage selon l'une des revendications 1 à 6, **caractérisé en ce que** le piston (5) pneumatique s'appuie au moyen du support de soupape (14), sur le piston (20) hydraulique, le module ou sous-groupe ainsi constitué étant précontraint au moyen d'un ressort de retenue (21) agencé dans le carter (18).

8. Dispositif hydropneumatique d'assistance de force d'embrayage selon l'une des revendications 1 à 7, **caractérisé en ce que** le ressort (12) de détecteur de pression est agencé entre le plongeur (10) et le piston (5) pneumatique, autour de la tige (13), et s'appuie d'une part sur le plongeur (10) et d'autre part sur le support de soupape (14) en produisant la précontrainte de ce dernier contre le piston (20) hydraulique.

9. Dispositif hydropneumatique d'assistance de force d'embrayage selon l'une des revendications 1 à 8, **caractérisé en ce que** le support de soupape (14) présente deux parois de forme annulaire contre lesquelles s'appuient des flancs ou lèvres correspondants de la soupape d'entrée/sortie (15) de forme annulaire, qui de préférence est réalisée en caoutchouc.

10. Dispositif hydropneumatique d'assistance de force d'embrayage selon l'une des revendications 1 à 9, **caractérisé en ce que** la soupape d'entrée/sortie (15) comporte au moins un alésage ou perçage (16).

11. Dispositif hydropneumatique d'assistance de force d'embrayage selon l'une des revendications 1 à 10, **caractérisé en ce que** la soupape d'entrée/sortie (15) délimite en commun avec le support de soupape (14) et les parois qu'il porte, une chambre de compensation de pression (28) de forme annulaire, dans laquelle est agencé un ressort de retenue (17) s'appuyant sur le support de soupape (14) et sur la soupape d'entrée/sortie (15).

12. Dispositif hydropneumatique d'assistance de force d'embrayage selon l'une des revendications 1 à 11, **caractérisé en ce que** le piston (5) pneumatique est rendu étanche par rapport à son carter (1), à l'aide d'au moins deux joints d'étanchéité (9a ; 9b), de préférence des joints toriques, de sorte qu'il en résulte une première chambre d'amenée d'air (29) qui est en communication avec une entrée d'air (2) agencée dans le carter (1) pour l'envoi commandé d'air comprimé à l'intérieur du dispositif, et avec un canal d'air (7) agencé dans le piston (5).

13. Dispositif hydropneumatique d'assistance de force d'embrayage selon l'une des revendications 1 à 12, **caractérisé en ce que** le piston (5) pneumatique est rendu étanche par rapport au support de soupape (14) à l'aide d'au moins un joint d'étanchéité (9c), de préférence un joint torique, de sorte qu'est délimitée une chambre de pression-poussée (26) dans laquelle s'engage le plongeur (10).

14. Dispositif hydropneumatique d'assistance de force d'embrayage selon l'une des revendications 1 à 13, **caractérisé en ce que** le piston (5) pneumatique forme en combinaison avec le support de soupape (14) et l'une de ses parois, en commun avec au moins une partie de la soupape d'entrée/sortie (15) et le siège d'étanchéité (6) du piston (5), une deuxième chambre d'amenée d'air (27).

15. Dispositif hydropneumatique d'assistance de force d'embrayage selon l'une des revendications 1 à 14, **caractérisé en ce que** le carter (1) du piston (5) pneumatique forme, en commun avec un tronçon de celui-ci et du support de soupape (14), une chambre d'évacuation d'air (30) qui dispose d'une sortie d'air d'évacuation (3) agencée dans le carter (1) pour l'évacuation commandée d'air comprimé.

16. Système d'embrayage constitué par un dispositif hydropneumatique d'assistance de force d'embrayage selon l'une au moins des revendications 1 à 15, **caractérisé en ce que** le signal d'embrayage appliqué par le plongeur (10) et amplifié par le dispositif d'assistance de force d'embrayage, est appliqué à un dispositif d'actionnement d'embrayage (25), par l'intermédiaire d'une conduite (24) qui est raccordée à une sortie (19) agencée sur le carter (18) du piston (20) hydraulique, pour la sortie commandée d'huile hydraulique.

17. Système d'embrayage selon la revendication 16, **caractérisé en ce que** le dispositif d'actionnement d'embrayage (25) est un maître-cylindre agencé sur la boite de vitesses ou de transmission ou un dispositif de débrayage central intégré à la boite de vitesses ou de transmission.

18. Système d'embrayage selon la revendication 16 ou 17, **caractérisé en ce qu'**un réservoir hydraulique pour l'huile hydraulique du piston (20) hydraulique, est intégré au niveau du dispositif hydropneumatique d'assistance de force d'embrayage.

19. Procédé pour amplifier une force de pédale appliquée à un dispositif hydropneumatique d'assistance de force d'embrayage selon l'une au moins des revendications 1 à 15, selon lequel la force de pédale est transférée par l'intermédiaire d'un plongeur (10) réalisé sous forme de piston d'actionnement et monté coulissant dans un carter (1), à un ressort (12) de détecteur de pression qui, en fonction d'une valeur de seuil qui lui est inhérente, transmet la force qui lui est appliquée, à un piston (5) pneumatique réalisé sous forme de piston d'assistance, selon lequel au moyen du plongeur (10), en interaction avec une soupape d'entrée/sortie (15) intégrée au piston (5) pneumatique, l'ouverture et respectivement la fermeture de la soupape d'entrée/sortie (15) est commandée ou pilotée par le plongeur (10), et selon lequel le piston (5) pneumatique est pour sa part en liaison interactive avec un piston (20) hydraulique monté coulissant dans un carter (18), de sorte que par l'intermédiaire de celui-ci il est possible d'actionner un dispositif d'actionnement, notamment un dispositif d'actionnement d'embrayage (25),
**caractérisé en ce que**
- le plongeur (10) est rendu étanche par glissement dans le carter (1) pneumatique,
- de l'air comprimé est envoyé de manière commandée dans le dispositif au moyen de la soupape d'entrée/sortie (15), et
- en-dessous de la valeur de seuil, le piston (20) hydraulique est déplacé au moyen du plongeur (10) par l'intermédiaire du ressort (12) de détecteur de pression et le piston (5) pneumatique.

20. Procédé selon la revendication 19, **caractérisé en ce que** lors du dépassement de la valeur de seuil du ressort (12) de détecteur de pression, de l'air comprimé est amené d'un réservoir d'air comprimé au dispositif hydropneumatique d'assistance de force, de sorte que celui-ci peut agir sur le piston (5) pneumatique.

21. Procédé selon la revendication 19 ou 20, **caractérisé en ce que** le ressort (12) de détecteur de pression agit par l'intermédiaire d'un support de soupape (14), sur le piston (5) pneumatique et sur le piston (20) hydraulique.

22. Procédé selon l'une des revendications 19 à 21, **caractérisé en ce qu'**à l'aide d'un siège d'étanchéité (11) agencé sur le plongeur (10) et coopérant avec un premier siège d'étanchéité, qui lui est associé, de la soupape d'entrée/sortie (15) portée par le support de soupape (14), ainsi qu'au moyen d'un siège d'étanchéité (6) agencé sur le piston (5) et coopérant avec un deuxième siège d'étanchéité, qui lui est associé, de la soupape d'entrée/sortie (15), on régule l'entrée et l'évacuation de l'air comprimé en fonction de la valeur de seuil du ressort (12) de détecteur de pression.

23. Procédé selon l'une des revendications 19 à 22, **caractérisé en ce que** la force de pédale de la pédale d'embrayage est envoyée dans le dispositif d'assistance de force sans interposition d'une hydraulique supplémentaire.
